# EUROPEAN PATENT APPLICATION

(11) **EP 2 693 291 A1**
(43) Date of publication of application: **05.02.2014**
(21) Application number: 11862194.5
(22) Date of filing: 30.03.2011
(51) Int. Cl.: G06F 1/14, G06F 9/46

(54) **INFORMATION PROCESSING DEVICE, CONTROL METHOD, AND PROGRAM**

(71) Applicant: Fujitsu Limited, Kawasaki-shi, Kanagawa 211-8588 (JP)
(72) Inventor: HATAMORI, Shuei, Kawasaki-shi Kanagawa 211-8588 (JP)
(74) Representative: HOFFMANN EITLE
(86) International application number: PCT/JP2011/058150
(87) International publication number: WO 2012/131964

(57) **Abstract**

Information processing equipment that has one or plurality of partitions further includes: a detection unit configured to detect switching of a clock unit from a first clock unit for counting a time used by an operating system in the partition to a second clock unit; a first setting unit configured to set a time obtained from the first clock unit to a third clock unit for counting a time used in the partition when switching of the clock unit is not detected, and to set a time obtained from the third clock unit to the second clock unit when switching of the clock unit is detected; and a second setting unit configured to set a time that is set to the first clock unit by the operating system to the third clock unit when time setting to the first clock unit performed by the operating system is detected.

## Description

### Technical Field

The present invention is related to an information processing equipment, a control method, and a program.

### Background Art

Conventionally, information processing equipment including a plurality of system boards are known. A system board includes, for example, a CPU (Central Processing Unit including a memory controller), a memory, an I/O HUB, a Legacy I/O Controller HUB (ICH), and an RTC (Real Time Clock). A system board operates as one logical system in combination with an IO device that is connected under the I/O HUB. In other words, a system board operates as a partition.

When an information processing equipment includes a plurality of system boards, the information processing equipment may include one or plurality of partitions by configuring certain system boards as one partition.

An RTC is a clock that is used in a partition. Note that only one RTC is valid in one partition. As the RTC operates on a power source different from the power source of the partition, for example, a battery, the RTC keeps the time even when the power source of the partition is cut off.

An information processing equipment includes a system control unit (SCU). The system control unit controls the partition configuration, the ON/OFF of the power source of the partition, or the like. The system control unit includes an SCU (System Control Unit) clock that keeps the time of the system control unit itself. The SCU clock is as accurate as the RTC. Moreover, the system control unit includes a storage medium that stores partition information.

For example, when a failure in a system board #0 is detected, information processing equipment restarts the partition that includes the system board #0. At this time, the information processing equipment detaches the system board #0 from the partition, and the partition is restored by installing a spare standby system board #1 into the partition.

When an OS (Operating System) starts operating, the OS obtains the time measured by the RTC (hereinafter, referred to as "RTC time") from the RTC. While the OS is operating, the obtained RTC time is kept by a counter of a CPU. The OS uses the time kept by the counter of the CPU. Hereinafter, the time used by an OS will be referred to as an "OS time". When the OS stops operating, the OS sets the OS time obtained from the counter of the CPU to the RTC. Accordingly, the OS time is kept by the RTC while the OS is not operating.

When the system board #0 is replaced by the spare system board #1 while an RTC provided for the system board #0 is valid, it becomes necessary to validate, for example, the RTC of the system board #1 as a valid RTC in the partition. In this case, the OS obtains an RTC time from the RTC of the system board #1 as the OS time.

Generally, the RTC time kept by the RTC of the pre-switched system board #0 is different from the RTC time kept by the RTC of the post-switched system board #1. For this reason, the OS time may be changed between before and after the replacement of the system board. Accordingly, a taking over process of the OS time is performed.

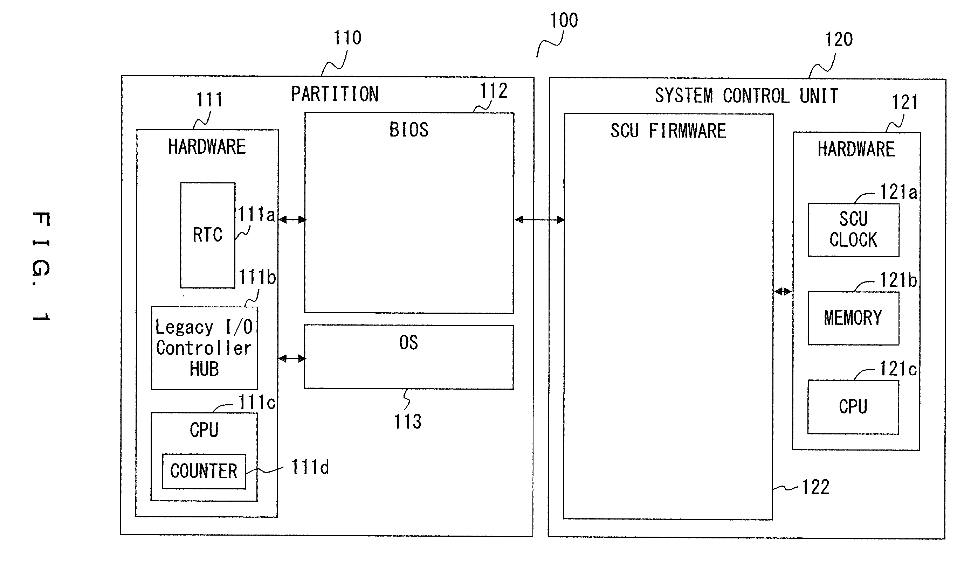

FIG. 1 is a diagram of information processing equipment 100 for describing a taking over process of the OS time.

The information processing equipment 100 illustrated in FIG. 1 includes a partition 110 that is obtained by logically dividing the information processing equipment 100 and a system control unit 120.

The partition 110 includes hardware 111, a BIOS (Basic Input Output System) 112 and an OS 113 that are operated by a CPU 111c, and the like. The hardware 111 includes an RTC 111a, a Legacy I/O Controller HUB 111b and the CPU 111c, and the like. The CPU 111c includes a counter 111d that counts the time.

The system control unit 120 includes hardware 121, an SCU firmware 122 that is executed by a CPU 121c, and the like. The hardware 121 includes an SCU clock 121a, a memory 121b and the CPU 121c, and the like.

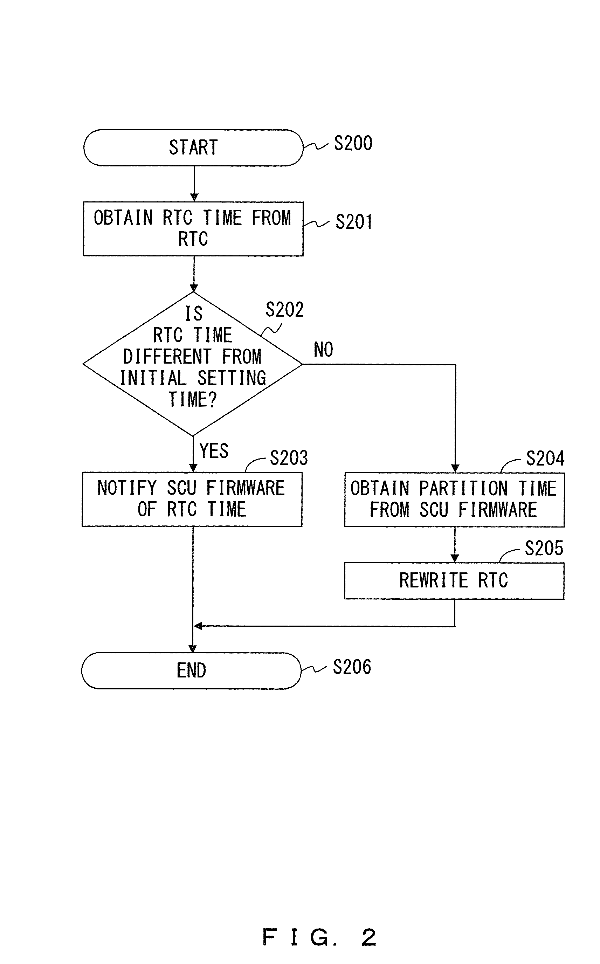

The information processing equipment 100 takes over the OS time by performing the processes illustrated in FIG. 2.

BIOS 112 obtains an RTC time from the RTC 111a before the OS 113 starts operating (step S201). When the RTC time is different from the initial setting time ("YES" in step S202), the BIOS 112 notifies the SCU firmware 122 of the RTC time (step S203). In this case, the SCU firmware 122 stores a difference value Δt between the RTC time received from the BIOS 112 and the time of the SCU clock 121a in the memory 121b. Hereinafter, the time of an SCU clock will be referred to as an "SCU time". As described above, the SCU firmware 122 maintains a reference time used in the partition (hereinafter, referred to as "partition time") in the form of a difference value Δt with respect to the SCU time of the SCU clock 121a.

When the RTC time is the initial setting time ("NO" in step S202), the BIOS 112 determines that a system board has been replaced. In this case, the BIOS 112 obtains a partition time from the SCU firmware 122 (step S204). In particular, processes are performed as follows. Firstly, the BIOS 112 requests that the SCU firmware 122 provide a partition time. Then, the SCU firmware 122 that has received the request creates the partition time by adding the difference value Δt stored in the memory 121b to the SCU time of the SCU clock 121a. Then, the SCU firmware 122 notifies the BIOS 112 of the created partition time.

When the partition time is obtained from the SCU firmware 122, the BIOS 112 rewrites the RTC time of the RTC 111a with the partition time obtained from the SCU firmware 122 (step S205).

Subsequently, when the OS 113 starts operating, the OS 113 obtains an RTC time from the RTC 111a. The obtained RTC time is kept by the counter 111d of the CPU 111c. The OS 113 uses the time counted by the counter 111d as the OS time.

As described above, the information processing equipment 100 may take over the OS time even when the system board including the RTC used in the partition is replaced.

In relation to the technique described above, a method for accessing a real time clock is known in which the accesses from processors are received at a bus acquisition controller and the bus acquisition controller connects one of the processors to the real time clock through a common bus.

### Prior Art Documents

### Patent Documents

Patent Document 1: Japanese Laid-open Patent Publication No. 05-006235

### Summary of the Invention

### Problems to be solved by the Invention

In the taking over process of the OS time described in FIG. 2, however, it is required that the initial setting time be set to the RTC time of the newly-configured system board. For this reason, when a value other than that of the initial setting time has been set to the RTC time, for example, when the newly-configured system board had already been used as the resource of the partition and the RTC time had been set thereto prior to the replacement and then the initial setting time was not set to the RTC time, it is not possible to normally take over the time.

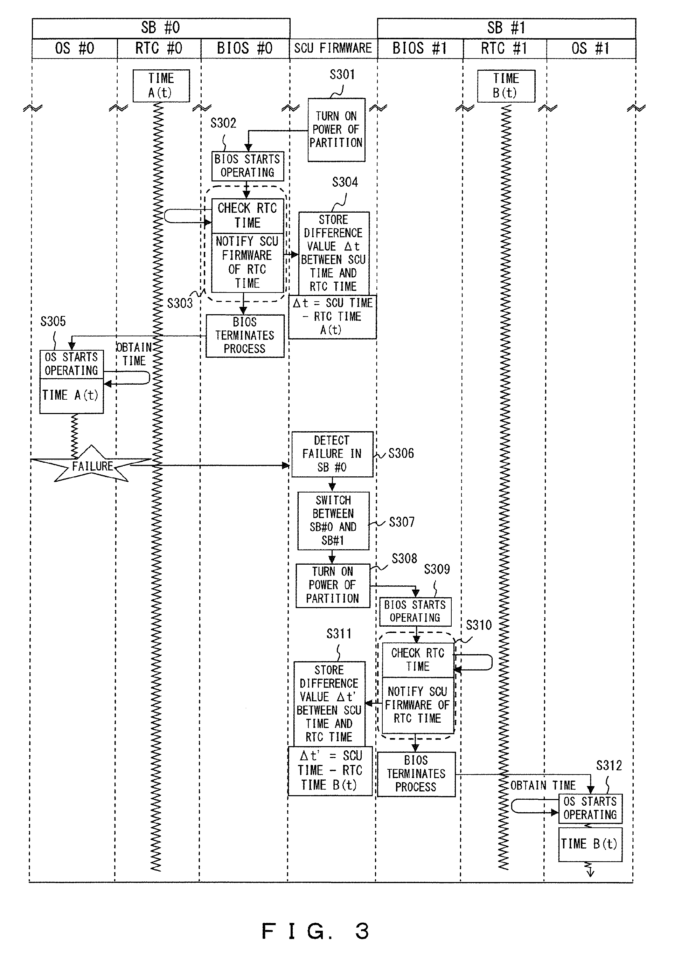

FIG. 3 illustrates an example of the case in which a taking over process of a time is not normally performed.

In FIG. 3, the system board #0 and the system board #1 are abbreviated to "SB #0" and "SB #1" , respectively. Moreover, the RTC on the SB #0 is referred to as an RTC #0, and the OS and BIOS that operate on the SB #0 are referred to as an OS #0 and a BIOS #0, respectively. The RTC time of the RTC #0 is referred to as A(t). In a similar manner, the RTC on the SB #1 is referred to as an RTC #1, and the OS and BIOS that operate on the SB #1 are referred to as an OS #1 and a BIOS #1, respectively. The RTC time of the RTC #1 is referred to as B(t). Note that the RTC time A(t) and B(t) have values different from that of the initial setting time.

In step S301, the SCU firmware 122 turns on the power of the partition 110. At this time, the SCU firmware 122 controls, for example, the reset signals of the devices included in the partition 110. Then, when the SCU firmware 122 cancels the reset signal of the CPU of the SB #0, the CPU of the SB #0 reads a specified program from a memory, and executes the program. Accordingly, the BIOS #0 starts operating (step S302).

In step S303, the BIOS #0 reads an RTC time A(t) from the RTC #0. In the example of FIG. 3, as the RTC time A(t) has a value other than the initial setting time, the BIOS #0 notifies the SCU firmware 122 of the RTC time A(t).

In step S304, the SCU firmware 122 calculates a difference value Δt between the RTC time A(t) received from the BIOS #0 and the SCU time of the SCU clock 121a. Then, the SCU firmware 122 stores the calculated difference value Δt in the memory 121b. When the OS #0 starts operating, the BIOS #0 terminates the process.

In step S305, when the OS #0 starts operating, the OS #0 obtains the RTC time A(t) from the RTC #0. The OS #0 uses the RTC time A(t) as the OS time.

Here, a case in which the SB #0 has failed and the OS #0 has shut down will be described. In such a case, the SCU firmware 122 detects a failure in the SB #0 (step S306). Then, the SCU firmware 122 switches system boards to be used from the SB #0 to the SB #1. In other words, the SB #0 is detached from the configuration of the partition 110, and the SB #1 is installed into the configuration of the partition 110 (step

S307).

In step S308, the SCU firmware 122 performs power-on process for the partition 110. At this time, the SCU firmware 122 controls, for example, the reset signals of the devices included in the partition 110. Then, when the SCU firmware 122 cancels the reset signal of the CPU of the SB #1, the CPU of the SB #1 reads a specified program from a memory and executes the program. As a result, the BIOS #1 starts operating (step S309).

In step S310, the BIOS #1 reads an RTC time B (t) from the RTC #1. In the example of FIG. 3, the RTC time B (t) has a value different from the initial setting time, and thus the BIOS #1 notifies the SCU firmware 122 of the RTC time B(t).

In step S311, the SCU firmware 122 calculates a difference value Δt' between the RTC time B(t) received from the BIOS #1 and the SCU time of the SCU clock 121a. Then, the SCU firmware 122 stores the calculated difference value Δt' in the memory 121b. When the OS #1 starts operating, the BIOS #1 terminates the process.

In step S312, when the OS #1 has started operating, the OS #1 reads a RTC time B(t) from the RTC #1. The OS #1 uses the RTC time B(t) as the OS time.

AS described above, a value other than the initial setting time is set to the RTC #1 of the newly-installed SB #1. Accordingly, the time A(t) that was being used by the OS #0 in the previously-installed SB #0 is not taken over to the OS #1 in the newly-installed SB #1.

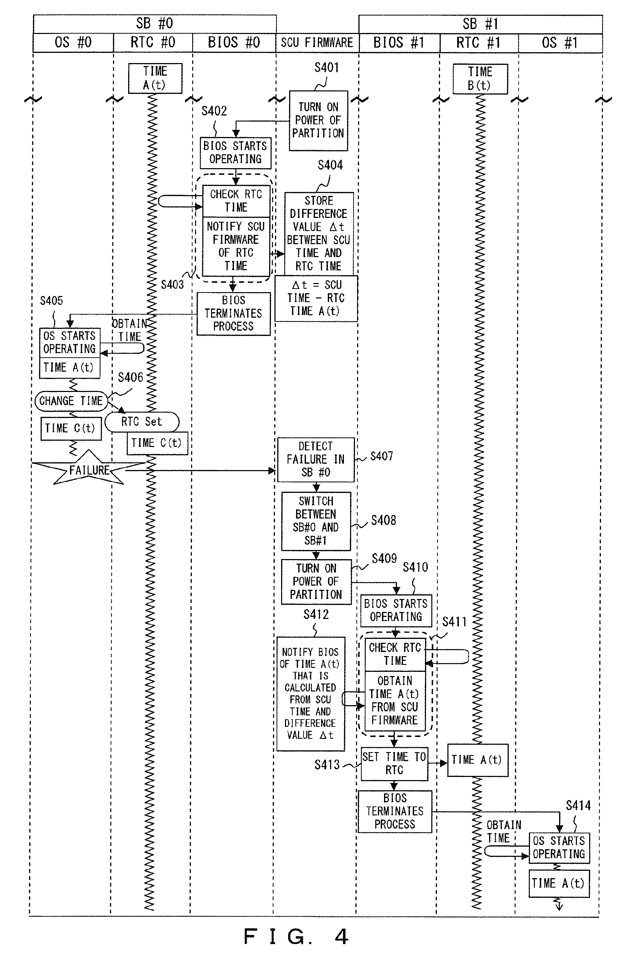

In the taking over process of the OS time described in FIG. 3, only when the partition starts operating, the SCU firmware 122 stores the RTC time in the memory 121b as the partition time in the form of a difference value between the RTC time and the SCU time. For this reason, for example, when the OS #0 changes the RTC time while the OS #0 is operating and the replacement of a system board or the like takes place without applying the result of the change to the RTC #0, it is not possible to take over the RTC time changed by the OS #0 to the OS #1 that operates on the newly-installed system board. A concrete example is illustrated in FIG. 4.

FIG. 4 illustrates another example of the case in which a taking over process of the OS time is not normally performed.

Note that the system board #0 and the system board #1 are abbreviated to "the SB #0" and "the SB #1" in FIG. 4, respectively. Moreover, the RTC on the SB #0 is referred to as the RTC #0, and the OS and BIOS that operate on the SB #0 are referred to as the OS #0 and the BIOS #0, respectively. The RTC time of the RTC #0 is referred to as A(t). In a similar manner, the RTC on the SB #1 is referred to as the RTC #1, and the OS and BIOS that operate on the SB #1 are referred to as the OS #1 and the BIOS #1, respectively. The RTC time of the RTC #1 is referred to as B(t). Note that the RTC time A(t) has a value different from the initial setting time, and the B (t) indicates the initial setting time.

In steps S401-S405, processes similar to those of steps S301-S305 illustrated in FIG. 3 are performed.

When an instruction to change the time is received from a user in step S406, the OS #0 uses the specified time C(t) afterward. Then, the OS #0 sets the time C(t) to the RTC #0.

Here, a case in which the SB #0 has failed and the OS #0 has shut down will be described. In this case, the SCU firmware 122 performs the processes similar to those of steps S306-S309 in steps S407-S410.

In step S411, the BIOS #1 reads a RTC time B(t) from the RTC #1. In the example of FIG. 4, the RTC time B(t) is the initial setting time, and thus the BIOS #1 obtains a partition time A(t) from the SCU firmware 122. In particular, at this time, processes are performed as follows. Firstly, the BIOS #1 requests that the SCU firmware 122 provide a partition time. Then, the SCU firmware 122 that has received the request creates the partition time A(t) by adding the difference value Δt stored in the memory 121b to the SCU time of the SCU clock 121a. Then, the SCU firmware 122 notifies the BIOS 112 of the created partition time A(t) (step S412).

When the partition time A(t) is received from the SCU firmware 122, the BIOS #1 sets the obtained partition time A(t) to the RTC #1. Then, when the OS #1 has started operating, the BIOS #1 terminates the process.

In step S414, when the OS #1 has started operating, the OS #1 obtains the RTC time A(t) from the RTC #1. The OS #1 uses the obtained RTC time A(t) as the OS time.

As described above, even when the initial setting time has been set to the RTC #1 of the newly-installed SB #1, the time C(t) changed by the OS #0 that was operating on the previously-installed SB #0 is not taken over to the OS #1 that operates on the newly-installed SB #1 unless the partition 110 is restarted prior to the replacement of the SB.

It is an object in one aspect of the present information processing equipment to reliably take over the time used by the operating system.

### Solution to solve the Problems

According to an aspect of the invention, an information processing equipment has one or plurality of partitions. The information processing equipment further includes following elements.

A detection unit is configured to detect switching of a clock unit from a first clock unit for counting a time used by an operating system in the partition to a second clock unit.

A first setting unit is configured to set a time obtained from the first clock unit to a third clock unit for counting a time used in the partition when switching of the clock unit is not detected, and to set a time obtained from the third clock unit to the second clock unit when switching of the clock unit is detected.

A second setting unit is configured to set a time that is set to the first clock unit by the operating system to the third clock unit when time setting to the first clock unit performed by the operating system is detected.

### Effects of the Invention

In one aspect of the invention, the information processing equipment is capable of reliably taking over the time used by the operating system.

### Brief Description of Drawings

FIG. 1 is a diagram of information processing equipment 100 for describing a taking over process of a time.
FIG. 2 is a flowchart illustrating a taking over process of the OS time.
FIG. 3 illustrates an example of the case in which a taking over process of the OS time is not normally performed.
FIG. 4 illustrates another example of the case in which a taking over process of the OS time is not normally performed.
FIG. 5 illustrates an outline of information processing equipment 500.
FIG. 6 illustrates an example of the configuration of information processing equipment 600.
FIG. 7 illustrates BIOS, OS, SMI handler, and SCU firmware.
FIG. 8 illustrates an outline of the start-up process of the partition 700.
FIG. 9 is a flowchart illustrating an example of the RTC switching process.
FIG. 10 is a flowchart illustrating an example of the detection of RTC switching as depicted in steps S903 and S918 of FIG. 9.
FIG. 11 illustrates an example of the RTC control by the BIOS 710, depicted in steps S904, S919, and S921 of FIG. 9.
FIG. 12 illustrates an example of the RTC time setting by the SMI handler 730, depicted in step S911 of FIG. 9.
FIG. 13 is a flowchart illustrating an example of the process in which the SCU firmware 740 provides the BIOS 720 with notification of RTC switching as depicted in step S915 of FIG. 9.
FIG. 14 illustrates a modification of the notification of "occurrence of RTC switching" from the SCU firmware 740 to the BIOS #0.
FIG. 15 is a flowchart illustrating an example of the RTC switching process in which bi-directional communication is performed between BIOS firmware and SCU firmware.

### Embodiments with respect to the Invention

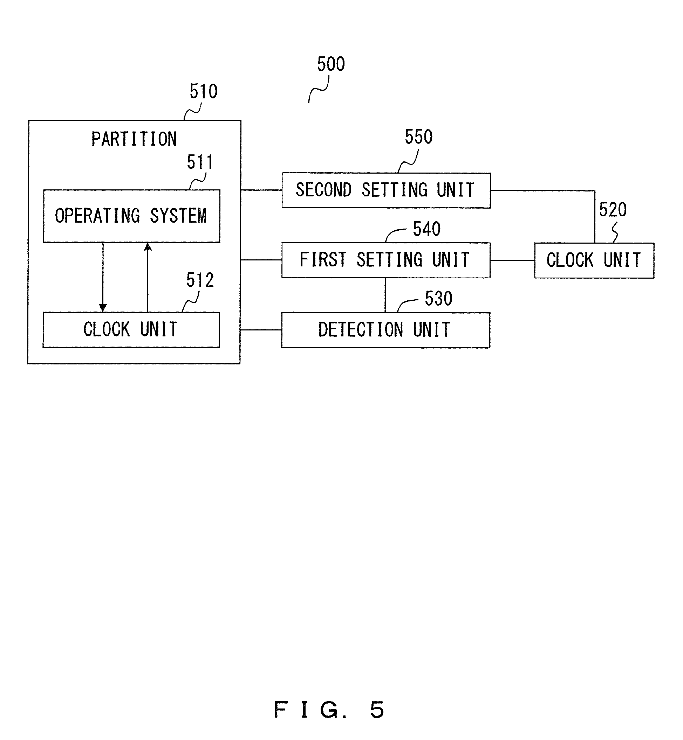

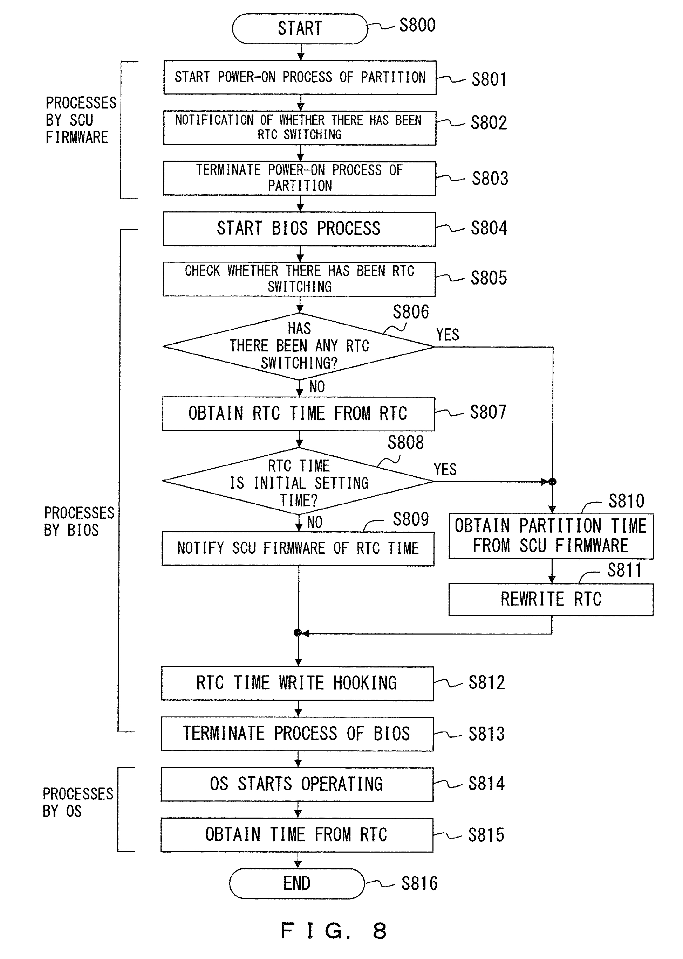

An example of the embodiment according to the present invention will be described below with reference to FIGS. 5-15. Note that the embodiment described below is given as an example, and various modifications or technical applications that will not be described below in an explicit manner are not to be excluded. In other words, various modifications including any combination of embodiments may be made to the present embodiment without departing from scope of the invention. Moreover, the order of the processes is not to be limited to the one specified in the procedure illustrated in the flowcharts of FIGS. 8-13 and FIG. 15. Accordingly, the order of the processes may be changed whenever possible as a matter of course.

### Embodiments

FIG. 5 illustrates an outline of information processing equipment 500 according to an embodiment. The information processing equipment 500 includes a partition 510, a clock unit 520, a detection unit 530, a first setting unit 540, and a second setting unit 550.

The partition 510 includes a part of or all of the resource of the information processing equipment 500. For example, the partition 510 includes a system board including a CPU, a memory and a clock unit 512, and an IO device. An operating system 511 operates when a specified program is executed by a CPU included in the partition 510. The partition 510 includes the clock unit 512 used by the operating system 511. The clock unit 512 provides a clock that counts the time used by the operating system 511.

The clock unit 520 provides a clock that counts the time to be used in the partition 510. The detection unit 530 detects the switching of the clock unit 512 that counts the time used by the operating system 511 in the partition 510.

For example, when a system board #0 included in the partition 510 is replaced with a system board #1, the first clock unit that serves as the clock unit 512 included in the system board #0 is switched to the second clock unit that serves as the clock unit 512 included in the system board #1. As described above, the detection unit 530 detects that the clock unit 512 that counts the time used by the operating system 511 is switched from the first clock unit to the second clock unit, which is caused by the replacement of a system board or the like. The first setting unit 540 obtains a time from the clock unit 512 before the operating system 511 starts operating, and the first setting unit 540 sets the obtained time to the clock unit 520 that counts the time to be used in the partition 510. However, when the switching of the clock unit 512 is detected, the first setting unit 540 obtains a time from the clock unit 520 before the operating system 511 starts operating, and the first setting unit 540 sets the obtained time to the clock unit 512.

When time setting to the clock unit 512 performed by the operating system 511 is detected after the operating system 511 has started operating, the second setting unit 550 sets the time, that has been set to the clock unit 512 by the operating system 511, to the clock unit 520.

As described above, when the switching of the clock unit 512 is detected, the information processing equipment 500 obtains a time from the clock unit 520 that counts the time to be used in the partition 510, and the information processing equipment 500 sets the obtained time to the clock unit 512. In addition, since the time of the previously-installed clock unit 512 has already been set to the clock unit 520, the time of the previously-installed clock unit 512 is taken over to the newly-installed clock unit 512. Accordingly, the time used by the operating system is taken over between before and after the switching of the clock unit 512, regardless of the time of the newly-installed clock unit 512.

When time setting to the clock unit 512 performed by the operating system 511 is detected, the information processing equipment 500 sets the time, that has been set to the clock unit 512 by the operating system 511, to the clock unit 520. When the switching of the clock unit 512 is detected afterward, the information processing equipment 500 obtains a time from the clock unit 520, and sets the obtained time to the clock unit 512. As a result, the newly-installed clock unit 512 takes over the time set to the previously-installed clock unit 512 by the operating system 511. As described above, even when the clock unit 512 is switched for some reason after the operating system 511 has changed the time of the clock unit 512, the time used by the operating system is taken over.

As described above, according to the information processing equipment 500 of the present embodiment, it becomes possible to reliably take over the time used by the operating system 511.

In FIG. 5, the partition 510 is separated from the clock unit 520, the detection unit 530, the first setting unit 540 and the second setting unit 550 for the sake of simplification. However, it is not intended that the clock unit 520, the detection unit 530, the first setting unit 540 and the second setting unit 550 should be elements independent from the partition 510. The clock unit 520, the detection unit 530, the first setting unit 540 and the second setting unit 550 may share the resource included in the partition 510, for example, a part of or all of an arithmetic unit or the like.

### Other Embodiments

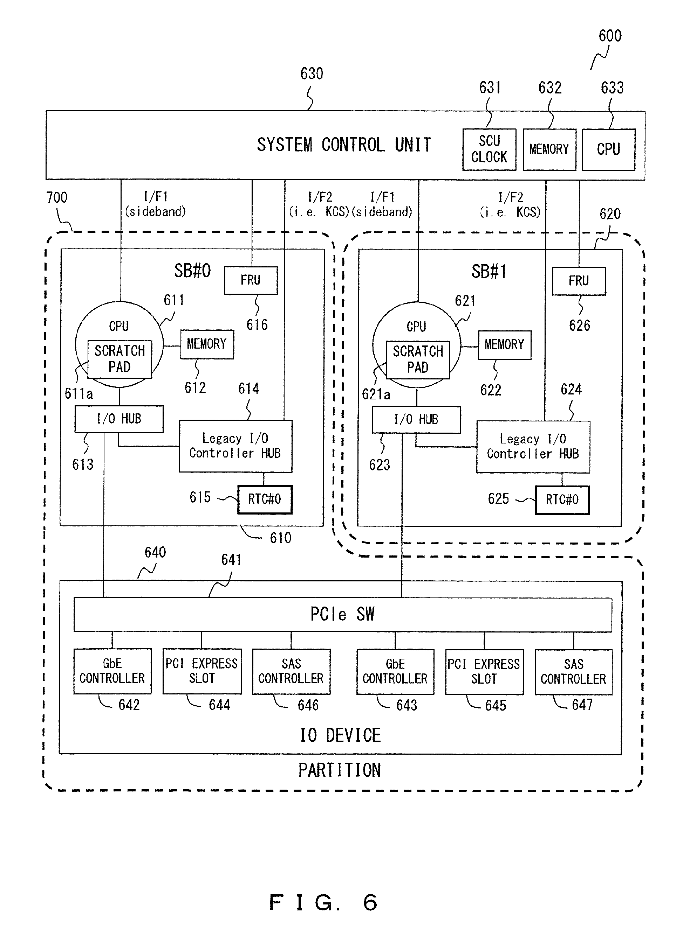

FIG. 6 illustrates an example of the configuration of information processing equipment 600 according to another embodiment. The information processing equipment 600 includes system boards 610 and 620, a system control unit 630, and an IO device 640. Moreover, the information processing equipment 600 realizes the partition 700 that includes the system board 610 and the IO device 640.

The system board 610 includes a CPU 611, a memory 612, an I/O HUB 613, a Legacy I/O Controller HUB 614, an RTC 615, and an FRU 616.

The CPU 611 is an arithmetic unit that reads a program developed in the memory 612, BIOS, OS, or the like, and executes an operation in accordance with an instruction given by the read program.

The memory 612 is a storage device in which a program to be executed by the CPU 611, data, and the like are stored. For example, a volatile memory such as a RAM (Random Access Memory) may be used as the memory 612.

The I/O HUB 613 is an interface for connecting the memory 612 with the Legacy I/O Controller HUB 614 or a PCIe (Peripheral Component Interconnect Express) switch 641.

The Legacy I/O Controller HUB 614 is an interface that enables connection to an LPC (Low Pin Count) interface or a PCI bus, a USB (Universal Serial Bus), or the like.

The Legacy I/O Controller HUB 614 may detect an access to a specific device through the Legacy I/O Controller HUB 614, and issue SMI interrupt.

The RTC 615 is a clock that is used in the partition 700. The RTC 615 uses a power source that is different from the power source used by the partition 700, for example, a battery. Accordingly, even when the power source of the partition 700 is cut off, the counting of the time will be maintained. For example, the RTC 615 is mapped at a specified address of the I/O space. Accordingly, the CPU 611 may access the RTC 615 by using an I/O access instruction. The Legacy I/O Controller HUB 614 may hook the I/O access to the specified I/O space address. For example, in an ICH (I/O Controller Hub) 10 of Intel Corporation, it is possible to configure the hook of the time writing into the RTC 615 by setting a value specifying the I/O space address of the RTC 615 and the type of an access such as write to a specified register of the ICH.

The FRU (Field Replaceable Unit) 616 is connected to the system control unit 630 in such a manner that the communication is enabled through, for example, a serial interface. The FRU 616 holds SB (System Board) information including the identification information of the devices such as the CPU 611, the memory 612, the I/O HUB 613, the Legacy I/O Controller HUB 614, and the RTC 615 in the system board 610. In response to a request from the system control unit 630, the FRU 616 notifies the system control unit 630 of the SB information.

The system board 620 is a spare system board that is used when the system board 610 has failed. The system board 620 includes a CPU 621, a memory 622, an I/O HUB 623, a Legacy I/O Controller HUB 624, an RTC 625, and an FRU 626.

Note that the configurations of the CPU 621 and the memory 622 are similar to those of the CPU 611 and the memory 612, respectively. Moreover, the configurations of the I/O HUB 623, the Legacy I/O Controller HUB 624, the RTC 625, and the FRU 626 are similar to those of the I/O HUB 613, the Legacy I/O Controller HUB 614, the RTC 615, and the FRU 616, respectively.

The system control unit 630 realizes SCU firmware by a specified program executed by a CPU 633 provided for the system control unit 630. The SCU firmware controls the configuration of the partition 700 or the power ON/OFF of the partition 700.

The system control unit 630 includes an SCU clock 631, a memory 632, and the CPU 633.

The SCU clock 631 is a clock that counts the time of the system control unit 630. The memory 632 is a storage device that stores partition information including the configuration of the partition 700, a difference time Δt, or the like. A nonvolatile memory such as an EEPROM (Electrically Erasable Programmable Read Only Memory) may be used as the memory 632. The CPU 633 is an arithmetic unit that executes a specified program.

The system control unit 630 is connected to the CPU 611 of the system board 610, and is capable of using a Network Controller Sideband interface or the like. Accordingly, the SCU firmware that operates in the system control unit 630 may set an RTC switching flag to the scratchpad of the CPU 611, as will be described later.

Moreover, the system control unit 630 is connected to the Legacy I/O Controller HUB 614 of the system board 610, and is capable of using a KCS (Keyboard Controller Style) interface or the like. Accordingly, for example, the BIOS that operates in the CPU 611 and the SCU firmware that operates in the system control unit 630 may achieve bi-directional communication through the I/O HUB 613 and the Legacy I/O Controller HUB 614.

The IO device 640 includes the PCIe switch 641, GbE (Gigabit Ethernet) controllers 642 and 643, PCIe slots 644 and 645, and SAS (Serial Attached SCSI (Small Computer System Interface)) controllers 646 and 647.

The PCIe switch 641 is a switch with a switching function that connects the system board 610 with the GbE controllers 642 and 643, the PCIe slots 644 and 645, and the SAS controllers 646 and 647 that are connected to the PCIe switch 641, in such a manner that the communication is enabled.

The GbE controllers 642 and 643 are interface devices used to connect to respective GbE network devices. The PCIe slots 644 and 645 are interface devices used to connect to respective PCIe devices. The SAS controllers 646 and 647 are interface devices used to connect to respective SAS devices.

Cases in which only one system board 610 is included in the partition 700 have been described in the above description, but no limitation on the number of the system boards 610 included in the partition 700 is intended therein.

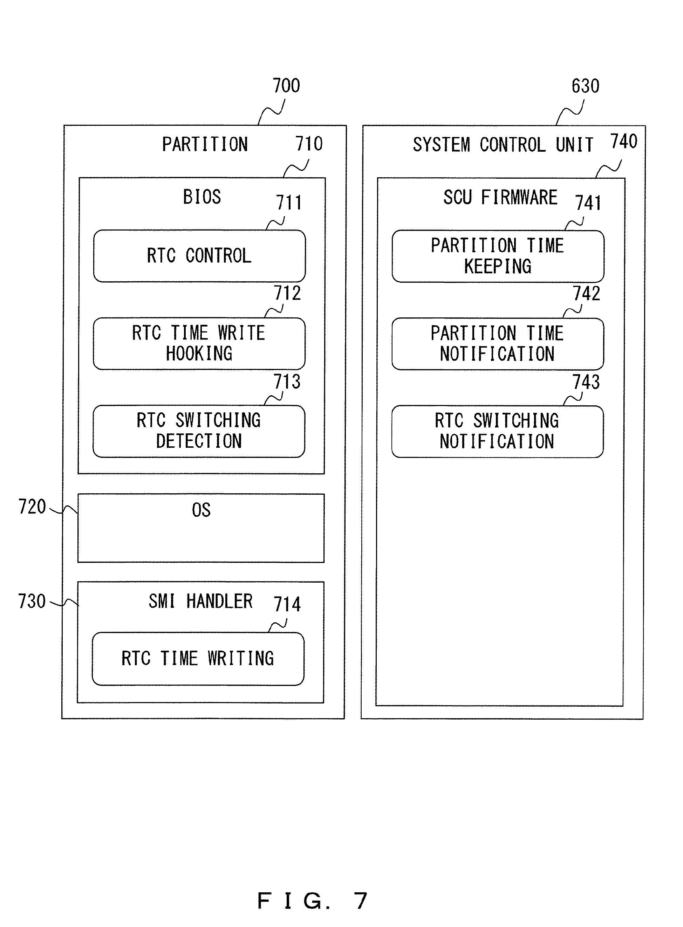

FIG. 7 illustrates BIOS, OS, SMI handler, and SCU firmware that are used in the embodiment.

The BIOS 710, an OS 720, and an SMI handler 730 operate in the partition 700. The BIOS 710, the OS 720, and the SMI handler 730 are included in the partition 700, and are executed by the CPU 611 of the system board 610. When the system board included in the partition 700 is replaced from the system board 610 to the system board 620, the BIOS 710, the OS 720, and the SMI handler 730 are executed by the CPU 621 of the system board 620.

In addition to the initialization process for the devices, peripherals and the like included in the partition 700, the BIOS 710 performs, for example, the following processes.

The BIOS 710 controls a valid RTC in the partition 700 such as reading an RTC time from the valid RTC and setting a time to the valid RTC (711). For example, the BIOS 710 reads an RTC time from a valid RTC in the partition 700, and notifies the SCU firmware 740 of the read RTC time. Moreover, the BIOS 710 obtains a partition time from the SCU firmware 740, and sets the obtained partition time to a valid RTC in the partition 700.

In the case of the partition 700 illustrated in FIG. 6, the RTC 615 is valid because the system board 610 is the only one system board in the partition 700. On the other hand, when the system board of the partition 700 has been replaced from the system board 610 to the system board 620, the RTC 625 is valid because the system board 620 is the only one system board in the partition 700. In the description with reference to FIG. 7 and FIG. 8, a valid RTC in the partition 700 will simply be referred to as "RTC".

Moreover, the BIOS 710 performs RTC time write hooking by setting a specified value to the register of the Legacy I/O Controller HUB in the partition 700 (712). In the RTC time write hooking, the Legacy I/O Controller HUB detects the time setting to the RTC performed via the Legacy I/O Controller HUB and issues SMI interrupt.

Moreover, the BIOS 710 detects RTC switching (713). In particular, the BIOS 710 detects that the RTC has been switched according to an RTC switching flag that is set to the scratchpad of the CPU in which the BIOS 710 operates. In this case, the BIOS 710 obtains a partition time from the SCU firmware 740, and sets the obtained partition time to the RTC.

The OS 720 may sets a user-specified time to the RTC. In this case, the CPU that operates the OS 720 sets a time to the RTC via the Legacy I/O Controller HUB. Then, the Legacy I/O Controller HUB detects the time setting to the RTC performed via the Legacy I/O Controller HUB, and issues SMI interrupt. When the SMI interrupt is detected, the CPU that is executing the OS 720 runs the SMI handler 730.

The SMI handler 730 reads an RTC time from the RTC, and performs an RTC time write hooking process to notify the SCU firmware 740 of the read RTC time (714).

The SCU firmware 740 operates in the system control unit 630. The SCU firmware 740 is executed by the CPU 633 provided for the system control unit 630.

In addition to the control of the configuration of the partition 700 or the power ON/OFF of the partition 700, the SCU firmware 740 performs, for example, the following processes.

When the SCU firmware 740 is notified of the RTC time by the BIOS 710 or the SMI handler 730, the SCU firmware 740 keeps the notified RTC time as a partition time (741). In particular, the SCU firmware 740 keeps a partition time as follows. When the SCU firmware 740 is notified of the RTC time by the BIOS 710, the SCU firmware 740 calculates a difference value Δt between the notified RTC time and the SCU time read from the SCU clock 631. Then, the SCU firmware 740 stores the calculated difference value Δt in the memory 632.

Moreover, in response to a request from the BIOS 710, the SCU firmware 740 notifies the BIOS 710 of a partition time (742) . In particular, in response to a request from the BIOS 710, the SCU firmware 740 notifies the BIOS 710 of the SCU time read from the SCU clock 631 to which the difference value Δt stored in the memory 632 is added, as the partition time.

Moreover, when it is detected that the RTC has been switched, the SCU firmware 740 notifies the BIOS 710 of such RTC switching (743). In particular, the SCU firmware 740 writes an RTC switching flag onto a scratchpad provided for the CPU of the partition 700. After the BIOS 710 has started operating, the BIOS 710 may recognize the RTC switching flag by referring to a scratchpad provided for the CPU.

FIG. 8 illustrates an outline of the start-up process of the partition 700. In step S801, the SCU firmware 740 starts power-on process of the partition 700. Then, the SCU firmware 740 controls, for example, reset signals of the devices included in the partition 700 so as to perform an initialization or the like for these devices.

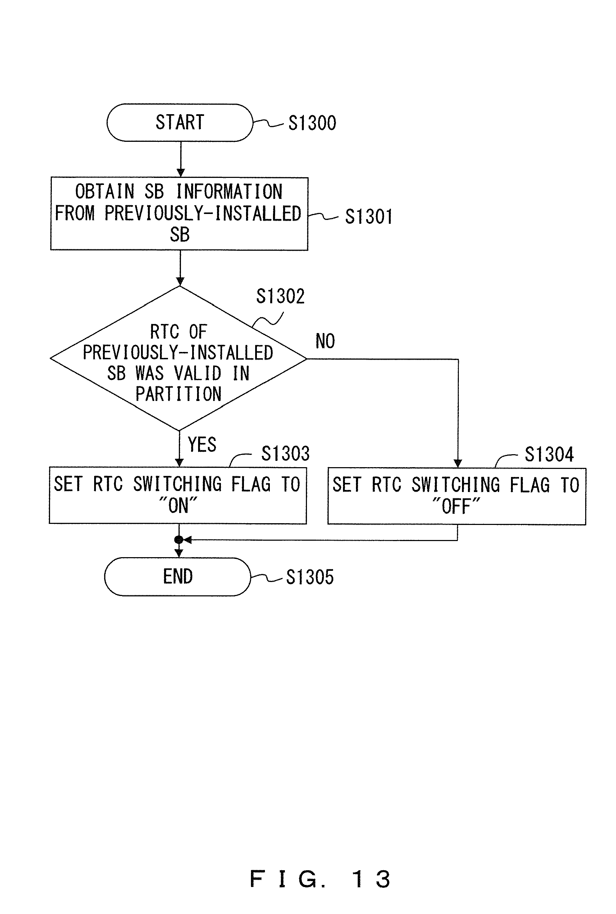

In step S802, the SCU firmware 740 checks whether there has been RTC switching. Whether there has been RTC switching may be checked, for example, by the processes performed in steps S1301 to S1302 of FIG. 13. Then, the SCU firmware 740 notifies the BIOS 710 of whether there has been RTC switching. In the present embodiment, an RTC switching flag is set to the scratchpad of the CPU that executes the BIOS 710 so as to notify the BIOS 710 of whether there has been RTC switching before the BIOS 710 is activated. The BIOS 710 may recognize whether there has been RTC switching by referring to the RTC switching flag set to the scratchpad of the CPU that executes the BIOS 710.

When the reset signal of the CPU of the partition 700 is cancelled by the SCU firmware 740, the CPU of the partition 700 executes a specified program. Accordingly, the BIOS 710 starts operating. The SCU firmware 740 terminates the power-on process of the partition 700 (step S803).

When the BIOS 710 has started operating (step S804), the BIOS 710 performs the following processes.

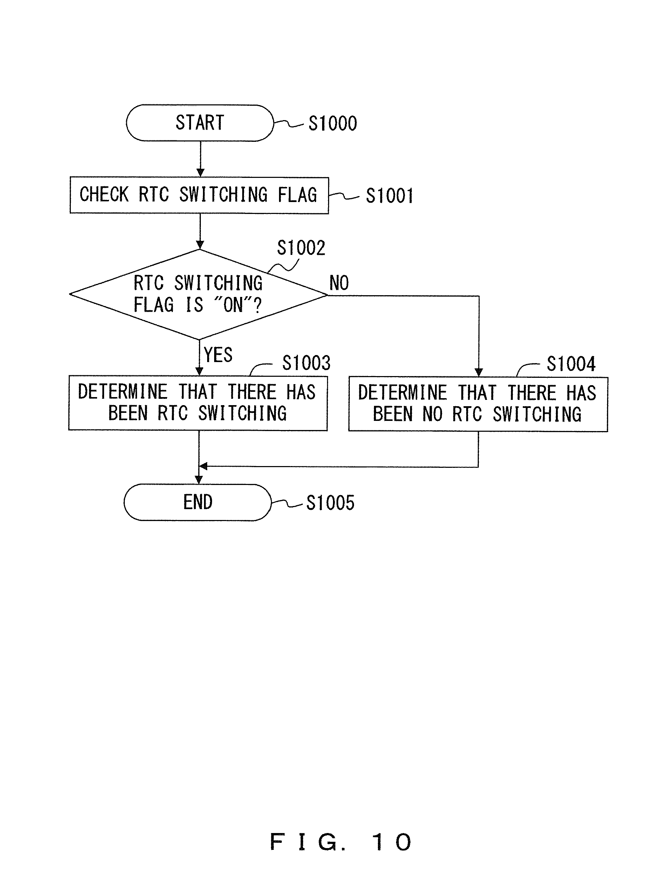

In step S805, the BIOS 710 checks whether there has been RTC switching. In particular, the BIOS 710 obtains an RTC switching flag set to the scratchpad of the CPU that is operating the BIOS 710, and determines whether there has been RTC switching according to the obtained RTC switching flag. The processes will be described more specifically with reference to FIG. 10.

When there has been no RTC switching ("NO" in step S806), the BIOS 710 obtains an RTC time from the RTC (step S807). Then, when the RTC time obtained in step S807 has a value other than the initial setting time ("NO" in step S808), the BIOS 710 notifies the SCU firmware 740 of the RTC time obtained in step S807 (step S809). When the notification of the RTC time is received, the SCU firmware 740 stores the received RTC time as the partition time.

Note that the initial setting time may be any time within the term that has been determined in advance. The initial setting time used in the present embodiment may be any time between January 1, 1970 and January 1, 1990. This is due to the following reason. A time that has been determined in advance, for example, January 1, 1970, is set to a newly manufactured RTC as the time at which clocking starts. In this case, the RTC starts clocking from January 1, 1970. For this reason, it is difficult to use the time at which clocking starts as an initial setting time. Accordingly, in the present embodiment, any time within a fixed term from January 1, 1970 that is the time at which clocking starts, i.e., any time between January 1, 1970 and January 1, 1990, is used as an initial setting time. However, it is not intended that the initial setting time should be limited to some time between January 1, 1970 and January 1, 1990. The initial setting time may be changed when necessary.

On the other hand, when there has been RTC switching ("YES" in step S806), or when the RTC time obtained in step S807 is the initial setting time ("YES" in step S807), the process of the BIOS 710 moves to step S810. In this case, the BIOS 710 obtains a partition time from the SCU firmware 740 (step S810) . Then, the BIOS 710 sets the obtained partition time to the RTC (step S811).

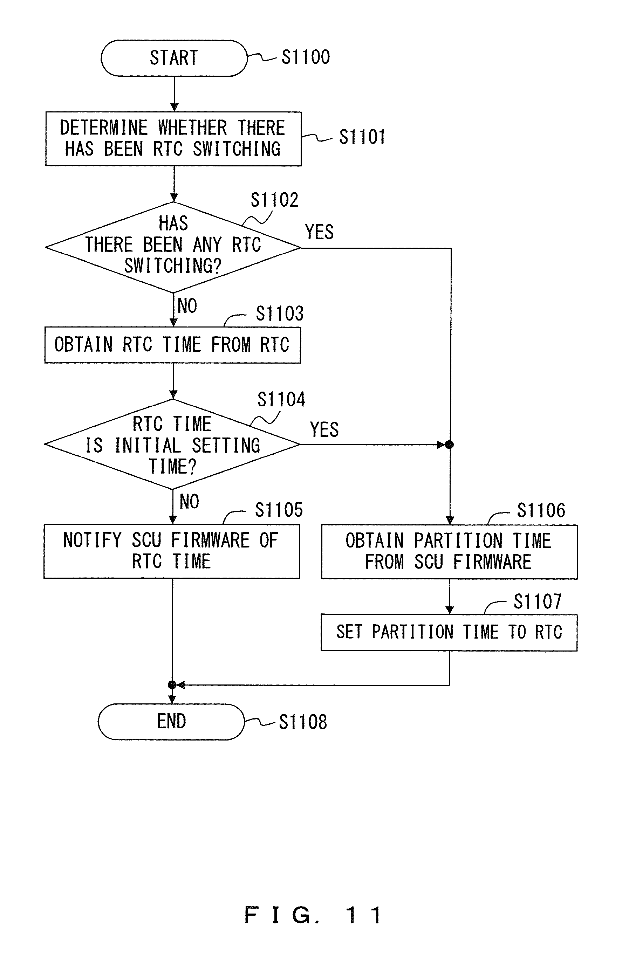

The processes of steps S806 to S811 will be described more specifically with reference to FIG. 11.

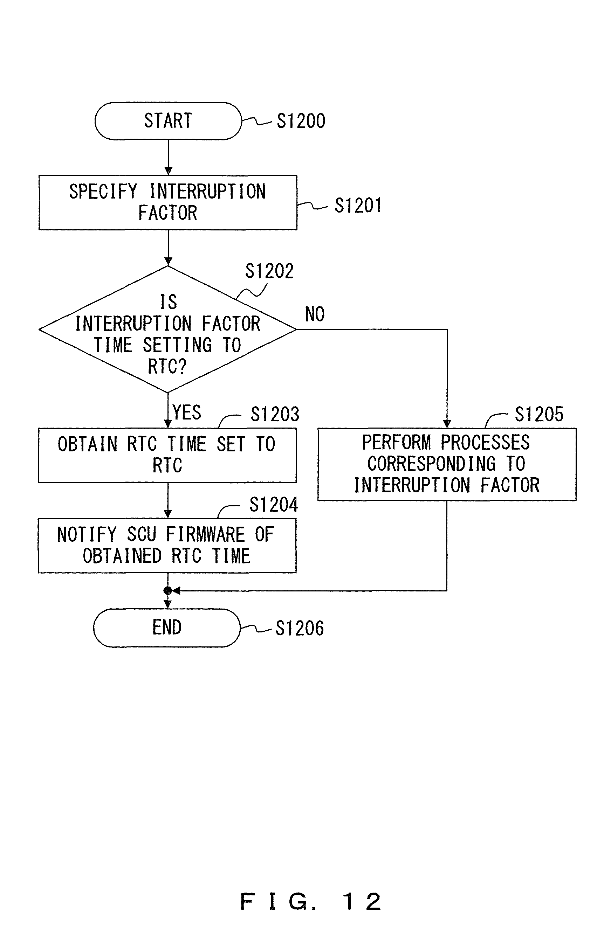

In step S812, the BIOS 710 performs RTC time write hooking, for example, by setting to the register in the Legacy I/O Controller HUB a specified value for hooking the I/O access to the I/O space address at which the RTC is mapped. Note that when the RTC time write hooking has already been performed, the BIOS 710 may skip the process of step S812. The processes of step S812 will be described more specifically with reference to FIG. 12. When the time setting to the RTC performed via the Legacy I/O Controller HUB is detected in the setting of step S812, the Legacy I/O Controller HUB issues SMI interrupt. When the SMI interrupt is detected, the CPU 611 activates an SMI handler. The SMI handler reads an RTC time from the RTC, and notifies the SCU firmware 740 of the read RTC time.

When the BIOS 710 activates the OS 720, the BIOS 710 terminates the process (step S813). When the OS 720 starts operating (step S814), the OS 720 obtains an RTC time from the RTC (step S815). The OS 720 uses the obtained RTC time as the OS time.

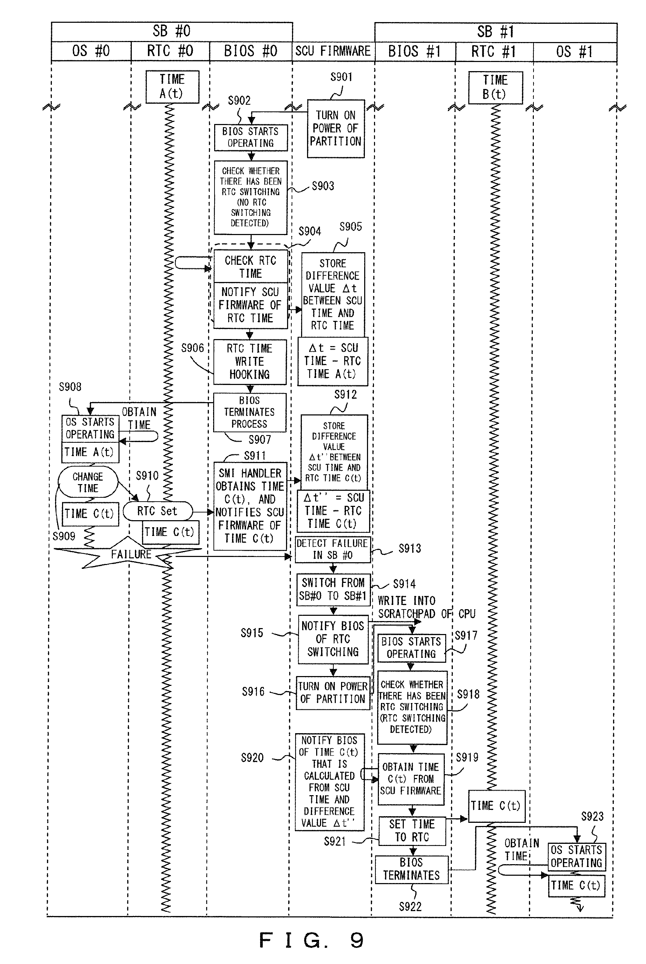

FIG. 9 is a flowchart illustrating an example of the RTC switching process according to the present embodiment. FIG. 9 illustrates the RTC switching process caused when the system board 610 included in the partition 700 is switched to the system board 620.

In the following description, the system board 610 and the system board 620 will be abbreviated to "the SB #0" and "the SB #1", respectively. Moreover, an optional system board will be abbreviated to an "SB". The RTC 615 on the SB #0 will be referred to as the RTC #0, and the OS and BIOS that operate on the SB #0 will be referred to as the OS #0 and the BIOS #0, respectively. The RTC time of the RTC #0 will be referred to as A(t). In a similar manner, the RTC 625 on the SB #1 will be referred to as the RTC #1, and the OS and BIOS that operate on the SB #1 will be referred to as the OS #1 and the BIOS #1, respectively. The RTC time of the RTC #1 will be referred to as B(t). It is assumed that values other than the initial setting time that has been determined in advance are set to the RTC times A(t) and B(t).

In step S901, the SCU firmware 740 turns on the power of the partition 700 that includes the SB #0. At this time, the SCU firmware 740 controls, for example, reset signals of the devices included in the partition 700. Then, when the reset signal of the CPU 611 of the SB #0 is cancelled by the SCU firmware 740, the CPU 611 reads a specified program from the memory 612 and executes the read program. Accordingly, the BIOS #0 starts operating (step S902).

In step S903, the operating BIOS #0 refers to the RTC switching flag set to the scratchpad 611a provided for the CPU 611. When the RTC switching flag indicates "ON", the BIOS #0 determines that there has been RTC switching. The following description is based on the premise that it has been determined in step S903 that there has been no RTC switching. When it is determined in S903 that there has been RTC switching, processes similar to those of steps S919-S921 are performed. Thus, the processes that are performed when there has been RTC switching will be described with reference to steps S919-S921.

In step S904, the BIOS #0 obtains the RTC time A(t) from the RTC #0. As the RTC time A(t) has a value other than the initial setting time in the example of FIG. 9, the BIOS #0 notifies the SCU firmware 740 of the read RTC time A(t).

In step S905, the SCU firmware 740 calculates a difference value Δt between the SCU time obtained from the SCU clock 631 and the RTC time A(t) received from the BIOS #0. Then, the SCU firmware 740 stores the calculated difference value Δt in the memory 632.

In step S906, the BIOS #0 performs RTC time write hooking for the Legacy I/O Controller HUB 614. In particular, the BIOS #0 writes to a specified register of the Legacy I/O Controller HUB 614 a value that specifies the setting to issue SMI interrupt when time setting to the RTC is performed through the Legacy I/O Controller HUB 614.

When the above process is completed, the BIOS #0 starts the OS #0 and terminates the process (step S907).

In step S908, when the OS #0 starts operating, the OS #0 obtains the RTC time A(t) from the RTC #0. The OS #0 uses the RTC time A(t) read from the RTC #0 as the OS time.

When an instruction to change the time is received from a user in step S909, the OS #0 sets a specified time C(t) to a counter within the CPU 611 as the OS time. Moreover, the OS #0 sets the specified time C(t) to the RTC #0 through the Legacy I/O Controller HUB 614. By so doing, the time C(t) is set to the RTC #0 (step S910).

When the Legacy I/O Controller HUB 614 detects that time setting to the RTC #0 has been done through the Legacy I/O Controller HUB 614, the Legacy I/O Controller HUB 614 issues SMI interrupt to the CPU 611. When the SMI interrupt is detected, the CPU 611 executes the SMI handler 730.

In step S911, the SMI handler 730 obtains the RTC time C(t) from the Legacy I/O Controller HUB 614, and notifies the SCU firmware 740 of the obtained RTC time C(t).

In step S912, when the SCU firmware 740 receives the RTC time C(t) from the SMI handler 730, the SCU firmware 740 calculates a difference value Δt'' between the SCU time obtained from the SCU clock 631 and the RTC time C(t) received from the SMI handler 730. Then, the SCU firmware 740 stores the calculated difference value Δt'' in the memory 632.

Here, a case in which the SB #0 has failed and the OS #0 has shut down will be described. In such a case, the SCU firmware 740 detects the failure in the SB #0 (step S913). Then, the SCU firmware 740 switches the SB used in the partition 700 from the SB #0 to the SB #1. In other words, the SCU firmware 740 detaches the SB #0 from the configuration of the partition 700, and installs the SB #1 into the configuration of the partition 700 (step S914). At that time, the valid RTC in the partition 700 is also switched from the RTC #0 provided for the SB #0 to the RTC #1 provided for the SB #1.

In step S915, the SCU firmware 740 provides the BIOS #1 with an RTC switching notice indicating that the valid RTC in the partition 700 has been switched. The SCU firmware 740 sets an RTC switching flag "ON" to a scratchpad 621a of the CPU 621 which is referred to by the BIOS #1 after the BIOS #1 has started operating.

In step S916, the SCU firmware 740 turns on the power of the partition 700 that includes the SB #1. At this time, the SCU firmware 740 controls, for example, reset signals of the devices included in the partition 700. Then, when the reset signal of the CPU 621 of the SB #1 is cancelled by the SCU firmware 740, the CPU 621 of the SB #1 reads a specified program from the memory and executes the read program. Accordingly, the BIOS #1 starts operating (step S917).

In step S918, the BIOS #1 refers to the scratchpad 621a of the CPU 621. When the RTC switching flag set to the scratchpad 621a of the CPU 621 indicates "ON", the BIOS #1 determines that there has been RTC switching. When the RTC switching flag set to the scratchpad 621a of the CPU 621 indicates "OFF", the BIOS #1 determines that there has been no RTC switching.

In step S919, the BIOS #1 obtains the partition time C (t) from the SCU firmware 740. In particular, at this time, processes are performed as follows. Firstly, the BIOS #1 requests that the SCU firmware 740 provide a partition time. Then, the SCU firmware 740 that has received the request creates the partition time C(t) by adding the difference value Δt'' stored in the memory 632 to the SCU time of the SCU clock 631. Then, the SCU firmware 740 notifies the BIOS #1 of the created partition time C(t) (step S920).

In step S921, when the partition time C(t) is received from the SCU firmware 740, the BIOS #1 sets the obtained partition time C(t) to the RTC #1. Then, when the OS #1 has started operating, the BIOS #1 terminates the process (step S922).

In step S923, when the OS #1 has started operating, the OS #1 obtains the RTC time C (t) from the RTC #1. The OS #1 uses the obtained RTC time C(t) as the OS time.

FIG. 10 is a flowchart illustrating an example of the detection of RTC switching as depicted in steps S903 and S918 of FIG. 9. Note that only the operation of the BIOS #0 will be described below, but the operation of the BIOS #1 is similar to that of the BIOS #0.

In step S1001, the BIOS #0 refers to the RTC switching flag set to the scratchpad 611a of the CPU 611 that is executing the BIOS #0. When the RTC switching flag indicates "ON" ("YES" in step S1002), the BIOS #0 determines that there has been RTC switching (step S1003). When the RTC switching flag indicates "OFF" ("NO" in step S1002), the BIOS #0 determines that there has been no RTC switching (step S1004).

When the above processes are completed, the BIOS #0 terminates the detection process of RTC switching (step S1005).

FIG. 11 illustrates an example of the RTC control by the BIOS 710, depicted in steps S904, S919, and S921 of FIG. 9. Note that only the operation of the BIOS #0 will be described below, but the operation of the BIOS #1 is similar to that of the BIOS #0.

In step S1101, the BIOS #0 determines whether there has been RTC switching or not. In step S1101, the detection of RTC switching illustrated in FIG. 10 will be performed. The detailed description is omitted as such description has already been given with respect to FIG. 10.

When it is determined that there has been no RTC switching ("NO" in step S1102), the BIOS #0 obtains an RTC time from the RTC #0 (step S1103). Then, in step S1104, the BIOS #0 checks whether or not the RTC time is equal to the initial setting time.

When the RTC time obtained in step S1103 is not equal to the initial setting time ("NO" in step S1104), the BIOS #0 notifies the SCU firmware 740 of the RTC time obtained in step S1103 (step S1105).

When it is determined that there has been RTC switching ("YES" in step S1102), or when the RTC time obtained in step S1103 is equal to the initial setting time ("YES" in step S1104), the process of the BIOS #0 moves to step S1106. In this case, the BIOS #0 obtains a partition time from the SCU firmware 740 (step S1106). Then, the BIOS #0 sets the partition time obtained from the SCU firmware 740 to the RTC #0 (step S1107).

When the above processes are completed, the BIOS #0 terminates the control process for the RTC (step S1108).

FIG. 12 illustrates an example of the RTC time setting by the SMI handler 730, depicted in step S911 of FIG. 9. Note that only the operation of the BIOS #0 will be described below, but the operation of the BIOS #1 is similar to that of the BIOS #0.

When an interruption signal is received from a device such as the Legacy I/O Controller HUB 614 included in the partition 700 or a peripheral, the CPU 611 starts executing the following processes (step S1200).

In step S1201, the CPU 611 specifies an interruption factor of the received interruption signal. When the interruption factor is the time setting to the RTC #0 performed via the Legacy I/O Controller HUB 614 ("YES" in step S1202), the CPU 611 executes the SMI handler 730. The SMI handler 730 shifts the process to step S1203.

In step S1203, the SMI handler 730 obtains the RTC time set to the RTC #0 via the Legacy I/O Controller HUB 614 from a specified register in the Legacy I/O Controller HUB 614.

In step S1204, the SMI handler 730 notifies the SCU firmware 740 of the RTC time obtained in step S1203. When the RTC time is received from the SMI handler 730, the SCU firmware 740 stores a difference value between the SCU time obtained from the SCU clock 631 and the RTC time received from the SMI handler 730 in the memory 632.

On the other hand, in step S1202, when the interruption factor is not the time setting to the RTC #0 performed via the Legacy I/O Controller HUB 614 ("NO" in step S1202), the CPU 611 performs the processes corresponding to the interruption factor (step S1205).

When the above processes are completed, the SMI handler 730 terminates the processes of the RTC time setting by the SMI handler 730.

FIG. 13 is a flowchart illustrating an example of the process in which the SCU firmware 740 provides the BIOS 720 with notification of RTC switching, as depicted in step S915 of FIG. 9.

Once SB switching is performed, the SCU firmware 740 performs the following processes (step S1300).

In step S1301, the SCU firmware 740 obtains the SB information from the previously-installed SB.

In step S1302, the SCU firmware 740 determines whether the RTC of the previously-installed SB was a valid RTC in the partition 700. In particular, the SCU firmware 740 compares the identification information of the RTC included in the SB information obtained in step S1301 with the identification information of the RTC that had been used before the system board was replaced and that was stored in advance in the memory 632 of the SCU firmware 740. When the result of the comparison indicates a match, the SCU firmware 740 may determine that the RTC of the previously-installed SB was a valid RTC in the partition 700.

When the RTC of the previously-installed SB was a valid RTC in the partition 700 ("YES" in step S1302), the SCU firmware 740 shifts the process to step S1303. In this case, the SCU firmware 740 sets an RTC switching flag "ON" to the CPU of the partition 700, for example, to a scratchpad in the CPU of the newly-installed SB.

When the RTC that had been used before the system board was replaced is not the RTC of the previously-installed SB ("NO" in step S1302), the process is shifted to step S1304. In this case, the SCU firmware 740 sets an RTC switching flag "OFF" to a scratchpad in the CPU of the partition 700.

When the above processes are completed, the SCU firmware 740 terminates the process of providing the BIOS with the notification of RTC switching (step S1305). The BIOS may recognize whether there has been RTC switching or not by performing the processes described with reference to FIG. 10.

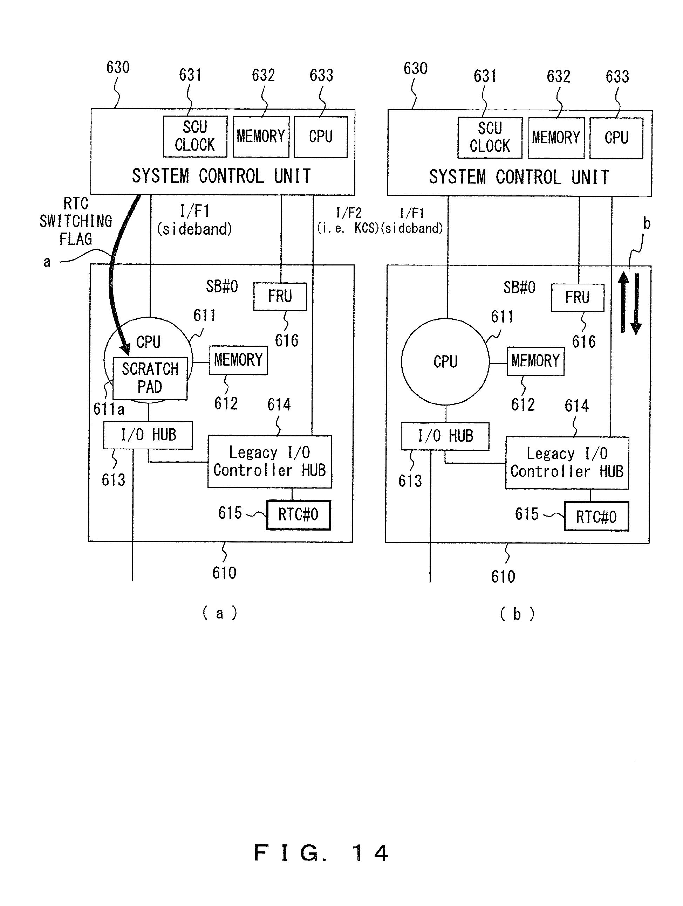

In the embodiment described above, as indicated by FIG. 14(a), the BIOS #0 receives notification of "RTC switching" from the SCU firmware 740 as the SCU firmware 740 refers to the RTC switching flag set to the scratchpad 611a (arrow "a"). In other words, the BIOS 710 receives notification of "RTC switching" from the SCU firmware 740 as the SCU firmware 740 refers to the RTC switching flag set to the scratchpad of the CPU in which the BIOS 710 operates.

However, as indicated by FIG. 14(b), for example, the BIOS #0 may receive notification of "RTC switching" from the SCU firmware 740 by bi-directional communication with the SCU firmware 740 using a KCS interface to perform (arrow "b"). In other words, it may be configured such that the BIOS 710 receives notification of "RTC switching" from the SCU firmware 740 by using a KCS interface to perform bi-directional communication with the SCU firmware 740.

Note that only a part of the information processing equipment 600 illustrated in FIG. 6 is illustrated by FIG. 14, and it is not intended that the information processing equipment 600 is limited to the configuration depicted by FIG. 14.

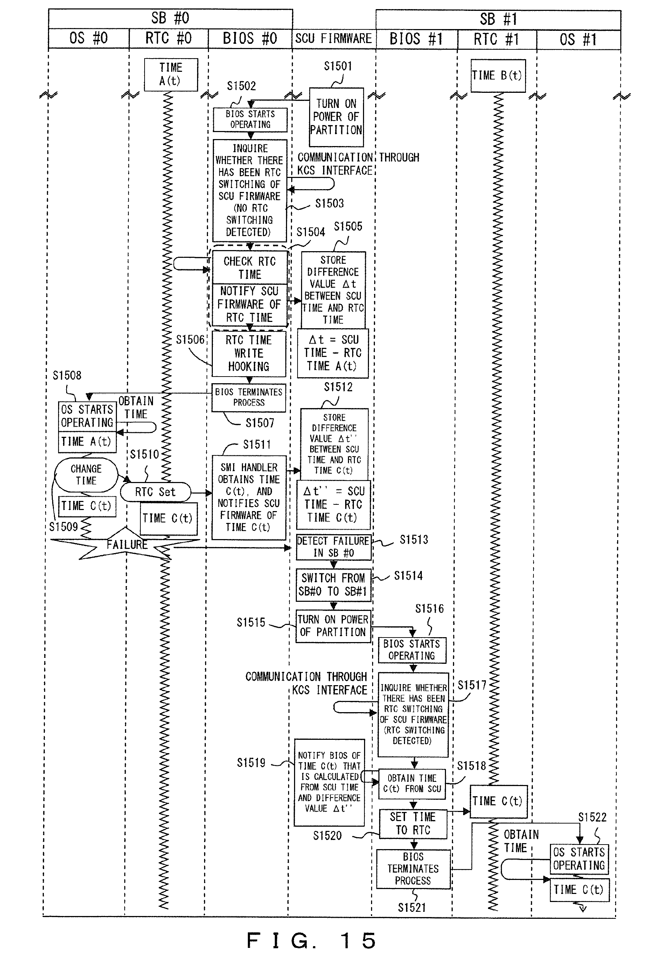

FIG. 15 is a flowchart illustrating an example of the RTC switching process in which bi-directional communication is performed between BIOS and SCU firmware. FIG. 15 illustrate an RTC switching process performed when the SB #0 included in the partition 700 is replaced by the SB #1.

In step S1501, the SCU firmware 740 turns on the power of the partition 700 that includes the SB #0. At this time, the SCU firmware 740 controls, for example, reset signals of the devices included in the partition 700. Then, when the reset signal of the CPU 611 of the SB #0 is cancelled by the SCU firmware 740, the CPU 611 reads a specified program from the memory 612 and executes the read program. Accordingly, the BIOS #0 starts operating (step S1502).

In step S1503, the BIOS #0 inquires whether there has been RTC switching of the SCU firmware 740 by performing communication through a KCS interface. When inquired by the BIOS #0, the SCU firmware 740 notifies the BIOS #0 of whether there has been RTC switching by performing communication through a KCS interface.

The SCU firmware 740 may recognize whether there has been RTC switching or not, for example, by referring to the RTC switching information stored in the memory 632. The RTC switching information may include the result of the decision of step S1003 or S1004 illustrated in FIG. 10. In this case, the SCU firmware 740 may generate RTC switching information and store the generated RTC switching information in the memory 632 in step S1003 or S1004.

In step S1503, it is assumed that there has been no RTC switching. Note that when there has been RTC switching, the processes similar to those of steps S1518-S1520 are performed.

The processes in steps S1504-S1514 are similar to the processes in steps S904-S914 of FIG. 9, and thus the description is omitted.

In step S1515, the SCU firmware 740 turns on the power of the partition 700 that includes the SB #1. At this time, the SCU firmware 740 controls, for example, reset signals of the devices included in the partition 700. Then, when the reset signal of the CPU 621 of the SB #1 is cancelled by the SCU firmware 740, the CPU 621 of the SB #1 reads a specified program from the memory and executes the read program. Accordingly, the BIOS #1 starts operating (step S1516).

In step S1517, the BIOS #1 inquires whether there has been RTC switching of the SCU firmware 740 by performing communication through a KCS interface. When inquired by the BIOS #1, the SCU firmware 740 notifies the BIOS #1 of whether there has been RTC switching by performing communication through a KCS interface.

In step S1517, it is assumed that there has been RTC switching. In this case, the processes in steps S1518-S1522 are similar to the processes in steps S919-S923 of FIG. 9, and thus the description is omitted.

As described above, the SCU firmware 740 detects RTC switching. Then, the SCU firmware 740 notifies the BIOS 710 of the partition 700 of RTC switching (see, for example, step S915). When notification of RTC switching is detected, the BIOS 710 obtains a partition time from the SCU firmware 740 at the time of startup, and sets the obtained partition time to the newly-installed RTC (see, for example, steps S918 to S921).

As described above, when there has been RTC switching, the BIOS 710 reads a partition time from the SCU firmware 740 at every startup, and sets the read partition time to the newly-installed RTC. Accordingly, even when no initial setting time is set to the newly-installed RTC, the RTC time of the previously-installed RTC may be taken over by the newly-installed RTC. As a result, the OS time may be taken over after RTC switching regardless of the time set to the newly-installed RTC, for example, even when no initial setting time is set to the newly-installed RTC.

The BIOS 710 performs RTC time write hooking for the Legacy I/O Controller HUB in the partition 700 (see, for example, step S906). Accordingly, when the OS 720 changes the OS time and the changed OS time is applied to the RTC time of an RTC, the SMI handler 730 is executed. At this time, the SMI handler 730 notifies the SCU firmware 740 of the RTC time of the RTC set by the OS 720 (see, for example, step S911). By so doing, the OS time changed by the OS 720 is applied to the partition time (see, for example, step S912).

As described above, when the OS 720 changes the OS time and the changed OS time is applied to the RTC time, the RTC time is also applied to the partition time. In this case, even when RTC switching is performed before the partition 700 is restarted after the OS 720 has changed the OS time, the partition time is taken over to the newly-installed RTC. Accordingly, even when RTC switching is performed before the partition 700 is restarted and after the OS 720 has changed the OS time, the RTC time of the previously-installed RTC may be taken over to the newly-installed RTC. In other words, the OS time prior to RTC switching may be taken over.

As described above, according to the information processing equipment 600 of the embodiments, the OS time may be taken over in a reliable manner.

As it is possible to take over the OS time in a reliable manner, it is no longer necessary to manually restore the OS time when the system board is replaced. The information processing equipment 600 according to the embodiment described above is able to take over the OS time without using a special device such as an external clocking device used to synchronize with the OS time by using an NTP (Network Time Protocol). Accordingly, extra cost of an external clocking device or the like will become no longer necessary.

## Claims

1. Information processing equipment that has one or plurality of partitions, the information processing equipment comprising:
a detection unit configured to detect switching of a clock unit from a first clock unit for counting a time used by an operating system in the partition to a second clock unit;
a first setting unit configured to set a time obtained from the first clock unit to a third clock unit for counting a time used in the partition when switching of the clock unit is not detected, and to set a time obtained from the third clock unit to the second clock unit when switching of the clock unit is detected; and
a second setting unit configured to set a time that is set to the first clock unit by the operating system to the third clock unit when time setting to the first clock unit performed by the operating system is detected.

2. The information processing equipment according to claim 1, further comprising a control unit configured to control configuration of the partition, wherein
when the control unit changes hardware included in the partition and a clock unit included in the hardware that is used before the change is the first clock unit that counts a time used by the operating system, the control unit determines that there has been switching of the clock unit.

3. The information processing equipment according to claim 2, wherein
the control unit notifies the detection unit of information indicating whether or not there has been switching of the clock unit via a specified storage unit.

4. The information processing equipment according to claim 2, wherein
the control unit notifies the detection unit of information indicating whether or not there has been switching of the clock unit by using a bi-directional communication interface to communicate with the detection unit.

5. A method for controlling information processing equipment that has one or plurality of partitions, the method comprising:
detecting switching of a clock unit from a first clock unit for counting a time used by an operating system in the partition to a second clock unit;
setting a time obtained from the first clock unit to a third clock unit for counting a time used in the partition when switching of the clock unit is not detected, and setting a time obtained from the third clock unit to the second clock unit when switching of the clock unit is detected; and
setting a time that is set to the first clock unit by the operating system to the third clock unit when time setting to the first clock unit performed by the operating system is detected.

6. A program causing information processing equipment that has one or plurality of partitions to perform a process comprising:
detecting switching of a clock unit from a first clock unit for counting a time used by an operating system in the partition to a second clock unit;
setting a time obtained from the first clock unit to a third clock unit for counting a time used in the partition when switching of the clock unit is not detected, and setting a time obtained from the third clock unit to the second clock unit when switching of the clock unit is detected; and
setting a time that is set to the first clock unit by the operating system to the third clock unit when time setting to the first clock unit performed by the operating system is detected.
